# EUROPEAN PATENT APPLICATION

(11) **EP 4 821 993 A1**
(43) Date of publication of application: **14.10.2026**
(21) Application number: 26167042.6
(22) Date of filing: 24.03.2026
(51) Int. Cl.: C09D 11/322, C09D 11/38

(54) **AQUEOUS INK FOR INKJET RECORDING, INKJET RECORDING APPARATUS, AND INKJET RECORDING METHOD**

(30) Priority: 31.03.2025 JP 2025060022
(71) Applicant: BROTHER KOGYO KABUSHIKI KAISHA, Aichi-ken 467-8561 (JP)
(72) Inventor: NISHIDA, Satoshi, Nagoya, 467-8562 (JP); TSUZAKA, Yuka, Nagoya, 467-8562 (JP); ISOGAI, Masato, Nagoya, 467-8562 (JP); KAWABATA, Issei, Nagoya, 467-8562 (JP)
(74) Representative: Kuhnen & Wacker Patent- und Rechtsanwaltsbüro PartG mbB

(57) **Abstract**

An aqueous ink for inkjet recording, including water, phycocyanin, a water-soluble organic solvent, and a saccharide. The saccharide comprises a monosaccharide, an oligosaccharide, or both a monosaccharide and an oligosaccharide.

## Description

### TECHNICAL FIELD

The present disclosure relates to an aqueous ink for inkjet recording, an inkjet recording apparatus, and an inkjet recording method.

### BACKGROUND ART

JP Patent Application Publication No. 2022-107267 discloses an inkjet recording ink that includes only colorants produced from petroleum-derived raw materials.

### DESCRIPTION

In recent years, from the perspective of decarbonization, it has been desired that the blue colorant used in inkjet recording inks be replaced from petroleum-derived raw materials to naturally derived raw materials obtained from plants.

Here, although several naturally derived raw materials exist for use as blue colorants, phycocyanin, in particular, has attracted attention as a water-soluble pigment that exhibits a very vivid blue color. On the other hand, inkjet recording inks containing phycocyanin have a problem in that they exhibit low storage stability over time.

Accordingly, it is an object of the present disclosure to provide an aqueous ink for inkjet recording that exhibits excellent storage stability over time and uses phycocyanin as a colorant, as well as to provide an inkjet recording apparatus and an inkjet recording method.

In order to achieve the above object, an aqueous ink for inkjet recording of the present disclosure comprises water, phycocyanin, a water-soluble organic solvent, and a saccharide, wherein the saccharide comprises a monosaccharide, an oligosaccharide, or both a monosaccharide and an oligosaccharide.

An inkjet recording apparatus of the present disclosure includes an inkjet head, and the inkjet head is configured to eject the aqueous ink for inkjet recording of the present disclosure onto a recording medium.

An inkjet recording method of the present disclosure includes a recording step of ejecting the aqueous ink for inkjet recording of the present disclosure from an inkjet head onto a recording medium to record on the recording medium.

According to the present disclosure, it is possible to provide the aqueous ink for inkjet recording, the inkjet recording apparatus, and the inkjet recording method, each of which uses phycocyanin as a colorant and exhibits excellent storage stability over time.
FIG. 1 is a schematic perspective view of an example of an inkjet recording apparatus.

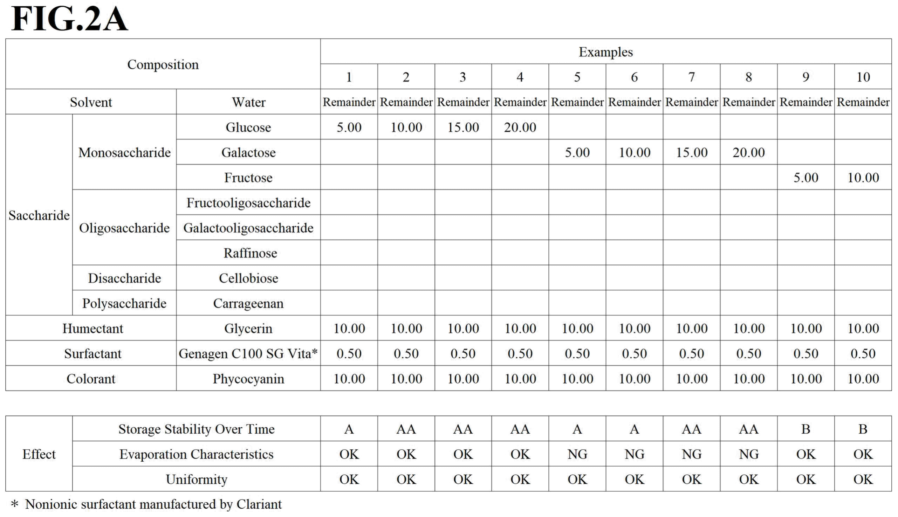

FIG. 2A is a table 1 that indicates aqueous ink compositions and evaluation results for Examples 1 to 10.

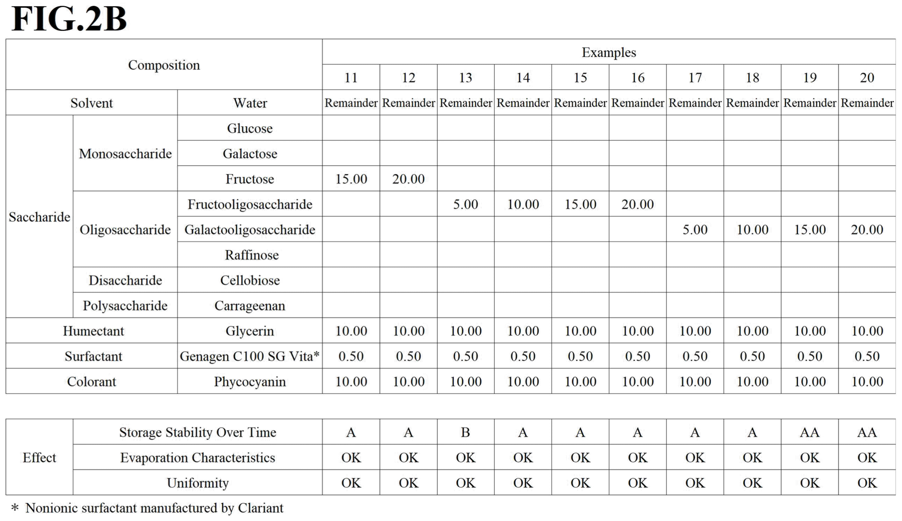

FIG. 2B is a table 1 that indicates aqueous ink compositions and evaluation results for Examples 11 o 20.

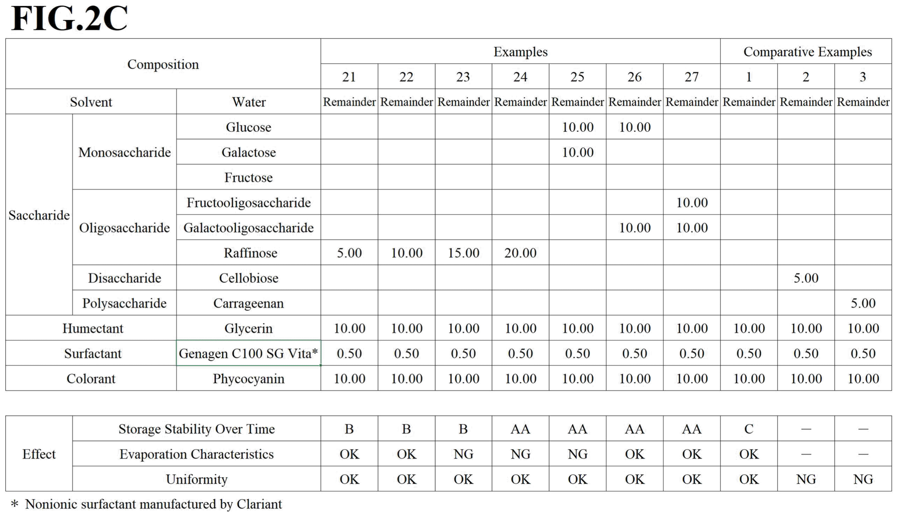

FIG. 2C is a table 1 that indicates aqueous ink compositions and evaluation results for Examples 21 to 27 and Comparative Examples 1 to 3.

In the present disclosure, the term "weight" may be interpreted as "mass" unless otherwise specified. For example, the term "weight ratio" may be interpreted as "mass ratio" unless otherwise specified, and the term "weight %" may be interpreted as "mass %" unless otherwise specified.

In the present disclosure, when a numerical range is indicated for various raw materials, parameters, and the like, the numerical range refers to a range that includes both the lower limit value and the upper limit value defining the range, unless otherwise specified. For example, when a numerical range of "1 to 10" is indicated, the numerical range refers to a range including the lower limit value of 1 and the upper limit value of 10 (that is, 1 or greater and 10 or less). In addition, in the present disclosure, when multiple upper limit values and/or multiple lower limit values are exemplified, any combination of the exemplified upper limit values and lower limit values may be used as the numerical range.

The term "weight %" as used in the present disclosure refers to a value rounded to the second decimal place, with the third decimal place rounded off.

In the following embodiments and examples, any description of mechanisms is merely a presumption, and the present disclosure is not limited to such described mechanisms.

### (Aqueous Ink for Inkjet Recording)

The aqueous ink for inkjet recording (hereinafter sometimes referred to as "aqueous ink" or "ink") of the present disclosure is described below. It should be noted that the aqueous ink of the present disclosure is, for example, a colored aqueous ink. The colored aqueous ink is, for example, an aqueous ink containing a colorant described later.

The aqueous ink of the present disclosure comprises water, a colorant, a water-soluble organic solvent, and saccharides. The water may be, for example, ion-exchanged water or purified water.

The aqueous ink of the present disclosure has a water content of, for example, 10.00 wt% to 90.00 wt%, or 20.00 wt% to 80.00 wt%, based on the total weight of the aqueous ink. The water content may also be, for example, the remainder of the other raw materials.

The aqueous ink of the present disclosure is a cyan ink containing at least phycocyanin as the colorant. The aqueous ink of the present disclosure may also be a cyan ink containing only phycocyanin as the colorant.

The aqueous ink of the present disclosure may further be, for example, a cyan ink containing, in addition to phycocyanin, a blue dye such as gardenia blue as the colorant. The aqueous ink of the present disclosure may also contain, as the colorant, in addition to phycocyanin, a red dye such as gardenia red or monascus red. Furthermore, the aqueous ink of the present disclosure may contain, as the colorant, in addition to phycocyanin, a yellow dye such as gardenia yellow or safflower yellow. In such cases, the aqueous ink of the present disclosure is an ink having a color such as purple or green.

The aqueous ink of the present disclosure has a phycocyanin content, based on the total weight of the aqueous ink, whose lower limit may be, for example, 5.00 wt% or greater or 10.00 wt% or greater. The phycocyanin content, based on the total weight of the aqueous ink, may have an upper limit of, for example, 15.00 wt% or less or 10.00 wt% or less. The phycocyanin content, based on the total weight of the aqueous ink, may also be, for example, 5.00 wt% to 15.00 wt%, 5.00 wt% to 10.00 wt%, or 10.00 wt% to 15.00 wt%.

The aqueous ink of the present disclosure may also be an ink containing, as the colorant, for example, in addition to phycocyanin, a petroleum-derived pigment. By containing both phycocyanin and the petroleum-derived pigment as the colorant, the content of the petroleum-derived pigment contained in the aqueous ink can be reduced, for example, as compared with a case where only the petroleum-derived pigment is contained.

The petroleum-derived pigment may include, for example, carbon black, inorganic pigments, and organic pigments. Examples of the carbon black include, for example, furnace black, lamp black, acetylene black, and channel black. Examples of the inorganic pigments include, for example, titanium oxide, iron-oxide-based inorganic pigments, and carbon-black-based inorganic pigments. Examples of the organic pigments include azo pigments such as azo lakes, insoluble azo pigments, condensed azo pigments, and chelate azo pigments; polycyclic pigments such as phthalocyanine pigments, perylene and perinone pigments, anthraquinone pigments, quinacridone pigments, dioxazine pigments, thioindigo pigments, isoindolinone pigments, and quinophthalone pigments; dye lake pigments such as basic dye lake pigments and acid dye lake pigments; nitro pigments; nitroso pigments; aniline black; daylight fluorescent pigments; and the like. In addition, other pigments may also be used as long as they can be dispersed in an aqueous phase. Specific examples of the pigments include, for example, C.I. Pigment White 1, 4, 5, 6, 7, 18, 19, 20, 21, 22, 23, 24, 25, 26, 27, and 28; C.I. Pigment Black 1, 6, and 7; C.I. Pigment Yellow 1, 2, 3, 12, 13, 14, 15, 16, 17, 55, 74, 78, 150, 151, 154, 180, 185, and 194; C.I. Pigment Orange 31 and 43; C.I. Pigment Red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C.I. Pigment Violet 19 and 196; C.I. Pigment Blue 1, 2, 3, 15, 15:1, 15:2, 15:3, 15:4, 16, 22, and 60; C.I. Pigment Green 7 and 36; and solid-solution pigments thereof.

The pigment may be one that is dispersed in a solvent by means of a resin dispersant (also referred to as a resin-dispersed pigment). The resin dispersant may be, for example, a conventionally known polymer dispersant (also referred to as a pigment-dispersing resin or resin dispersant). In the aqueous ink of the present disclosure, the pigment may also be encapsulated by a polymer.

The resin dispersant may be, for example, one containing at least one of methacrylic acid and acrylic acid as monomers, and may be a commercially available product. The resin dispersant may be, for example, a block copolymer, graft copolymer, or random copolymer composed of two or more monomers selected from among hydrophobic monomers such as styrene, styrene derivatives, vinylnaphthalene, vinylnaphthalene derivatives, and aliphatic alcohol esters of α,β-ethylenically unsaturated carboxylic acids, or from among monomers such as acrylic acid, acrylic acid derivatives, maleic acid, maleic acid derivatives, itaconic acid, itaconic acid derivatives, fumaric acid, and fumaric acid derivatives, or salts thereof.

Specific examples of such commercially available products include, for example: "Joncryl^{®} 611," "Joncryl^{®} 60," "Joncryl^{®} 586," "Joncryl^{®} 687," "Joncryl^{®} 63," and "Joncryl^{®} HPD296" manufactured by BASF Corporation; "Disperbyk 190" and "Disperbyk 191" manufactured by BYK-Chemie Corporation; and "Solsperse 20000" and "Solsperse 27000" manufactured by Lubrizol Corporation.

As a method for dispersing the pigment using the pigment-dispersing resin, a method of dispersing the pigment by using a dispersing device may be mentioned. The dispersing device used for dispersing the pigment is not particularly limited as long as it is a general disperser, and examples thereof include, for example, a ball mill, a roll mill, and a sand mill (for example, a high-speed type).
The pigment may be a self-dispersible pigment. The self-dispersible pigment is, for example, a pigment that can be dispersed in water without the use of a dispersant, by virtue of at least one hydrophilic functional group such as a carbonyl group, a hydroxyl group, a carboxyl group, a sulfonic acid group, or a phosphoric acid group, or a salt thereof, being introduced into the pigment particles directly or through another group by chemical bonding. The self-dispersible pigment may be one in which the pigment has been treated according to the methods described in, for example, JP H08-3498 A, JP 2000-513396 A, JP 2008-524400 A, JP 2009-515007 A, and JP 2011-515535 A. Either inorganic pigments or organic pigments may be used as raw materials for the self-dispersible pigment. Examples of pigments suitable for the above treatment include, for example, carbon black such as "MA8" and "MA100" manufactured by Mitsubishi Chemical Co., Ltd. The self-dispersible pigment may also be a commercially available product. Examples of such commercially available products include, for example: "CAB-O-JET^{®} 200," "CAB-O-JET^{®} 250C," "CAB-O-JET^{®} 260M," "CAB-O-JET^{®} 270Y," "CAB-O-JET^{®} 300," "CAB-O-JET^{®} 400," "CAB-O-JET^{®} 450C," "CAB-O-JET^{®} 465M," and "CAB-O-JET^{®} 470Y" manufactured by Cabot Corporation; "BONJET^{®} BLACK CW-2" and "BONJET^{®} BLACK CW-3" manufactured by Orient Chemical Industries Co., Ltd.; and "LIOJET^{®} WD BLACK 002C" manufactured by Artience Co., Ltd.

The aqueous ink of the present disclosure may also be an ink containing, as the colorant, for example, in addition to phycocyanin, a petroleum-derived dye. By containing both phycocyanin and the petroleum-derived dye as the colorant, the content of the petroleum-derived dye contained in the aqueous ink can be reduced, for example, as compared with a case where only the petroleum-derived dye is contained.

The petroleum-derived dye is not particularly limited, and examples thereof include direct dyes, acid dyes, basic dyes, and reactive dyes. Specific examples of such dyes include C.I. Direct Black, C.I. Direct Blue, C.I. Direct Red, C.I. Direct Yellow, C.I. Direct Orange, C.I. Direct Violet, C.I. Direct Brown, C.I. Direct Green, C.I. Acid Black, C.I. Acid Blue, C.I. Acid Red, C.I. Acid Yellow, C.I. Acid Orange, C.I. Acid Violet, C.I. Basic Black, C.I. Basic Blue, C.I. Basic Red, C.I. Basic Violet, and C.I. Food Black. Examples of the C.I. Direct Black include C.I. Direct Black 17, 19, 32, 51, 71, 108, 146, 154, and 168. Examples of the C.I. Direct Blue include C.I. Direct Blue 6, 22, 25, 71, 86, 90, 106, and 199. Examples of the C.I. Direct Red include C.I. Direct Red 1, 4, 17, 28, 83, and 227. Examples of the C.I. Direct Yellow include C.I. Direct Yellow 12, 24, 26, 86, 98, 132, 142, and 173. Examples of the C.I. Direct Orange include C.I. Direct Orange 34, 39, 44, 46, and 60. Examples of the C.I. Direct Violet include C.I. Direct Violet 47 and 48. An example of the C.I. Direct Brown is C.I. Direct Brown 109. An example of the C.I. Direct Green is C.I. Direct Green 59. Examples of the C.I. Acid Black include C.I. Acid Black 2, 7, 24, 26, 31, 52, 63, 112, and 118. Examples of the C.I. Acid Blue include C.I. Acid Blue 9, 22, 40, 59, 90, 93, 102, 104, 117, 120, 167, 229, and 234. Examples of the C.I. Acid Red include C.I. Acid Red 1, 6, 32, 37, 51, 52, 80, 85, 87, 92, 94, 115, 180, 256, 289, 315, and 317. Examples of the C.I. Acid Yellow include C.I. Acid Yellow 11, 17, 23, 25, 29, 42, 61, and 71. Examples of the C.I. Acid Orange include C.I. Acid Orange 7 and 19. An example of the C.I. Acid Violet is C.I. Acid Violet 49. Examples of the C.I. Basic Black include C.I. Basic Black 2. Examples of the C.I. Basic Blue include C.I. Basic Blue 1, 3, 5, 7, 9, 24, 25, 26, 28, and 29. Examples of the C.I. Basic Red include C.I. Basic Red 1, 2, 9, 12, 13, 14, and 37. Examples of the C.I. Basic Violet include C.I. Basic Violet 7, 14, and 27. Examples of the C.I. Food Black include C.I. Food Black 1 and 2.

The aqueous ink of the present disclosure may include, as the water-soluble organic solvent, for example, humectants and surfactants.

Examples of the humectants include, for example, lower alcohols such as methyl alcohol, ethyl alcohol, n-propyl alcohol, isopropyl alcohol, n-butyl alcohol, sec-butyl alcohol, and tert-butyl alcohol; amides such as dimethylformamide and dimethylacetamide; ketones such as acetone; ketoalcohols such as diacetone alcohol; ethers such as tetrahydrofuran and dioxane; polyethers such as polyalkylene glycols; alkylene glycols; polyhydric alcohols such as glycerin, trimethylolpropane, and trimethylolethane; 2-pyrrolidone; N-methyl-2-pyrrolidone; and 1,3-dimethyl-2-imidazolidinone. Examples of the polyalkylene glycols include, for example, polyethylene glycol and polypropylene glycol. Examples of the alkylene glycols include, for example, ethylene glycol, propylene glycol, butylene glycol, diethylene glycol, triethylene glycol, dipropylene glycol, tripropylene glycol, thiodiglycol, and hexylene glycol. The humectant may be a single humectant or a combination of two or more humectants.

The aqueous ink of the present disclosure has a humectant content of, for example, 1.00 to 20.00 wt%, 5.00 to 20.00 wt%, 5.00 to 15.00 wt%, or 10.00 to 15.00 wt%, based on the total weight of the aqueous ink.

The surfactant is not particularly limited and may be appropriately selected depending on the purpose, and a commercially available product may be used. Specific examples of the surfactant include, for example, silicone-based surfactants and acetylenic surfactants.

Examples of commercially available silicone-based surfactants include, for example, "Silface^{®} SAG002," "Silface^{®} SAG005," and "Silface^{®} SAG503A," manufactured by Nisshin Chemical Industry Co., Ltd.

Examples of commercially available acetylenic surfactants include, for example, "Olfin^{®} E1004," "Olfin^{®} E1008," and "Olfin^{®} E1010," manufactured by Nisshin Chemical Industry Co., Ltd.; "Surfynol^{®} 440," "Surfynol^{®} 465," and "Surfynol^{®} 485," also manufactured by Nisshin Chemical Industry Co., Ltd.; and "Acetylenol^{®} E40" and "Acetylenol^{®} E100," manufactured by Kawaken Fine Chemicals Co., Ltd.

The aqueous ink may contain, in addition to or in place of the silicone-based surfactant or the acetylenic surfactant, another surfactant. Examples of such other surfactants include, for example, the nonionic surfactant "Genagen C 100 SG Vita" manufactured by Clariant Corporation; nonionic surfactants in the "EMULGEN^{®}" series, "RHEODOL^{®}" series, "EMASOL^{®}" series, "EXCEL^{®}" series, "EMANON^{®}" series, "AMIET^{®}" series, and "AMINON^{®}" series, all manufactured by Kao Corporation; nonionic surfactants in the "Sorbon ^{®}" series manufactured by Toho Chemical Industry Co., Ltd.; nonionic surfactants in the "DOBANOX^{®}" series, "LEOCOL^{®}" series, "LEOX^{®}" series, "LAOL/LEOCOL^{®}" series, "LIONOL^{®}" series, "CADENAX^{®}" series, "LIONON^{®}" series, and "LEOFAT^{®}" series, all manufactured by Lion Corporation; anionic surfactants in the "EMAL^{®}" series, "LATEMUL^{®}" series, "VENOL^{®}" series, and "NEOPELEX^{®}" series, as well as NS SOAP, KS SOAP, OS SOAP, and the "PELEX^{®}" series, all manufactured by Kao Corporation; anionic surfactants in the "LIPOLAN^{®}" series, "LIPON^{®}" series, "SUNNOL^{®}" series, "LIPOTAC^{®} TE/ENAGICOL" series, "LIPAL^{®}" series, and "LOTAT^{®}" series, all manufactured by Lion Corporation; and cationic surfactants such as "Catiogen^{®} ES-OW" and "Catiogen^{®} ES-L," manufactured by Daiichi Kogyo Seiyaku Co., Ltd.

The surfactant may be a single surfactant or a combination of two or more surfactants.

The aqueous ink of the present disclosure has a surfactant content of, for example, 0.10 wt% to 10.00 wt%, or 0.50 wt% to 5.00 wt%, based on the total weight of the aqueous ink.

The aqueous ink of the present disclosure comprises, as the saccharides, a monosaccharide, an oligosaccharide, or both a monosaccharide and an oligosaccharide. The saccharides may not comprise, for example, a disaccharide. The saccharides may also not comprise, for example, a polysaccharide.

In the present disclosure, the term "oligosaccharide" refers to an oligomer of saccharides in which three to nine monosaccharide units are bonded via glycosidic bonds. In the present disclosure, the term "polysaccharide" refers to a polymer of saccharides in which ten or more monosaccharide units are bonded via glycosidic bonds.

Examples of the monosaccharides include, for example, glucose, galactose, fructose, mannose, xylose, arabinose, allose, tagatose, rhamnose, fucose, talose, and sorbose. The monosaccharide may be a single monosaccharide or a combination of two or more monosaccharides. When two or more monosaccharides are used, examples of the combinations include, for example, glucose and galactose; glucose and fructose; galactose and fructose; or glucose, galactose, and fructose; although other combinations may also be used.

Examples of the oligosaccharides include, for example, fructooligosaccharide, galactooligosaccharide, raffinose, isomaltooligosaccharide, and maltotriose. The oligosaccharide may be a single oligosaccharide or a combination of two or more oligosaccharides. When two or more oligosaccharides are used, examples of the combinations include, for example, fructooligosaccharide and galactooligosaccharide; fructooligosaccharide and raffinose; galactooligosaccharide and raffinose; or fructooligosaccharide, galactooligosaccharide, and raffinose; although other combinations may also be used.

The aqueous ink of the present disclosure comprises, as the monosaccharide and the oligosaccharide, for example, one monosaccharide and one oligosaccharide. Specifically, examples of such combinations of one monosaccharide and one oligosaccharide include, for example, glucose and fructooligosaccharide; glucose and galactooligosaccharide; glucose and raffinose; galactose and fructooligosaccharide; galactose and galactooligosaccharide; galactose and raffinose; fructose and fructooligosaccharide; fructose and galactooligosaccharide; and fructose and raffinose.

The aqueous ink of the present disclosure comprises, as the monosaccharides and the oligosaccharide, for example, two monosaccharides and one oligosaccharide. Specifically, examples of such combinations of two monosaccharides and one oligosaccharide include, for example, glucose, galactose, and fructooligosaccharide; glucose, galactose, and galactooligosaccharide; glucose, galactose, and raffinose; glucose, fructose, and fructooligosaccharide; glucose, fructose, and galactooligosaccharide; glucose, fructose, and raffinose; galactose, fructose, and fructooligosaccharide; galactose, fructose, and galactooligosaccharide; and galactose, fructose, and raffinose; although other combinations may also be used.

The aqueous ink of the present disclosure comprises, as the monosaccharide and the oligosaccharides, for example, one monosaccharide and two oligosaccharides. Specifically, examples of such combinations of one monosaccharide and two oligosaccharides include, for example, glucose, fructooligosaccharide, and galactooligosaccharide; glucose, fructooligosaccharide, and raffinose; glucose, galactooligosaccharide, and raffinose; galactose, fructooligosaccharide, and galactooligosaccharide; galactose, fructooligosaccharide, and raffinose; galactose, galactooligosaccharide, and raffinose; fructose, fructooligosaccharide, and galactooligosaccharide; fructose, fructooligosaccharide, and raffinose; and fructose, galactooligosaccharide, and raffinose; although other combinations may also be used.

The aqueous ink of the present disclosure comprises, as the monosaccharides and the oligosaccharide, for example, three monosaccharides and one oligosaccharide. Specifically, examples of such combinations of three monosaccharides and one oligosaccharide include, for example, glucose, galactose, fructose, and fructooligosaccharide; glucose, galactose, fructose, and galactooligosaccharide; and glucose, galactose, fructose, and raffinose; although other combinations may also be used.

The aqueous ink of the present disclosure comprises, as the monosaccharide and the oligosaccharides, for example, one monosaccharide and three oligosaccharides. Specifically, examples of such combinations of one monosaccharide and three oligosaccharides include, for example, glucose, fructooligosaccharide, galactooligosaccharide, and raffinose; galactose, fructooligosaccharide, galactooligosaccharide, and raffinose; and fructose, fructooligosaccharide, galactooligosaccharide, and raffinose; although other combinations may also be used.

The aqueous ink of the present disclosure comprises, as the monosaccharides and the oligosaccharides, for example, two monosaccharides and two oligosaccharides. Specifically, examples of such combinations of two monosaccharides and two oligosaccharides include, for example, glucose, galactose, fructooligosaccharide, and galactooligosaccharide; glucose, galactose, fructooligosaccharide, and raffinose; glucose, galactose, galactooligosaccharide, and raffinose; glucose, fructose, fructooligosaccharide, and galactooligosaccharide; glucose, fructose, fructooligosaccharide, and raffinose; glucose, fructose, galactooligosaccharide, and raffinose; galactose, fructose, fructooligosaccharide, and galactooligosaccharide; galactose, fructose, fructooligosaccharide, and raffinose; and galactose, fructose, galactooligosaccharide, and raffinose; although other combinations may also be used.

The aqueous ink of the present disclosure comprises, as the monosaccharides and the oligosaccharides, for example, three monosaccharides and two oligosaccharides. Specifically, examples of such combinations of three monosaccharides and two oligosaccharides include, for example, glucose, galactose, fructose, fructooligosaccharide, and galactooligosaccharide; glucose, galactose, fructose, fructooligosaccharide, and raffinose; and glucose, galactose, fructose, galactooligosaccharide, and raffinose; although other combinations may also be used.

The aqueous ink of the present disclosure comprises, as the monosaccharides and the oligosaccharides, for example, two monosaccharides and three oligosaccharides. Specifically, examples of such combinations of two monosaccharides and three oligosaccharides include, for example, glucose, galactose, fructooligosaccharide, galactooligosaccharide, and raffinose; glucose, fructose, fructooligosaccharide, galactooligosaccharide, and raffinose; and galactose, fructose, fructooligosaccharide, galactooligosaccharide, and raffinose; although other combinations may also be used.

The aqueous ink of the present disclosure comprises, as the monosaccharides and the oligosaccharides, for example, three monosaccharides and three oligosaccharides. Specifically, examples of such combinations of three monosaccharides and three oligosaccharides include, for example, glucose, galactose, fructose, fructooligosaccharide, galactooligosaccharide, and raffinose; although other combinations may also be used.

The aqueous ink of the present disclosure may also be one in which monosaccharides and oligosaccharides other than those described above are used in combination. Furthermore, the aqueous ink of the present disclosure may be one in which the monosaccharides and oligosaccharides described above are used in combination with monosaccharides and oligosaccharides other than those described above.

The aqueous ink of the present disclosure has a saccharide content, based on the total weight of the aqueous ink, whose lower limit may be, for example, 1.00 wt% or greater, 5.00 wt% or greater, 10.00 wt% or greater, 15.00 wt% or greater, or 20.00 wt% or greater. The saccharide content, based on the total weight of the aqueous ink, may also have an upper limit of, for example, 20.00 wt% or less, 15.00 wt% or less, 10.00 wt% or less, or 5.00 wt% or less. The saccharide content, based on the total weight of the aqueous ink, may also be, for example, 5.00 wt% to 20.00 wt%.

The aqueous ink of the present disclosure may comprise glucose as the monosaccharide, and the glucose content, based on the total weight of the aqueous ink, may be, for example, 10.00 wt% or greater.

The aqueous ink of the present disclosure may comprise fructose as the monosaccharide, and the fructose content, based on the total weight of the aqueous ink, may be, for example, 15.00 wt% or greater.

The aqueous ink of the present disclosure may comprise galactose as the monosaccharide, and the galactose content, based on the total weight of the aqueous ink, may be, for example, 15.00 wt% or greater.

The aqueous ink of the present disclosure may comprise fructooligosaccharide as the oligosaccharide, and the fructooligosaccharide content, based on the total weight of the aqueous ink, may be, for example, 10.00 wt% or greater.

The aqueous ink of the present disclosure may comprise galactooligosaccharide as the oligosaccharide, and the galactooligosaccharide content, based on the total weight of the aqueous ink, may be, for example, 15.00 wt% or greater.

The aqueous ink of the present disclosure may comprise raffinose as the oligosaccharide, and the raffinose content, based on the total weight of the aqueous ink, may be, for example, 20.00 wt% or greater.

The aqueous ink of the present disclosure may comprise two or more monosaccharides as the monosaccharide, and the total content of the two or more monosaccharides, based on the total weight of the aqueous ink, may be, for example, 20.00 wt% or greater. In addition, for example, when the two monosaccharides are glucose and galactose, the total content of the glucose and the galactose, based on the total weight of the aqueous ink, may be 20.00 wt% or greater.

The aqueous ink of the present disclosure may comprise two or more oligosaccharides as the oligosaccharide, and the total content of the two or more oligosaccharides, based on the total weight of the aqueous ink, may be, for example, 20.00 wt% or greater. In addition, for example, when the two oligosaccharides are fructooligosaccharide and galactooligosaccharide, the total content of the fructooligosaccharide and the galactooligosaccharide, based on the total weight of the aqueous ink, may be 20.00 wt% or greater.

The aqueous ink of the present disclosure has a total content of the monosaccharide and the oligosaccharide, based on the total weight of the aqueous ink, that may be, for example, 20.00 wt% or greater.

The aqueous ink of the present disclosure may precipitate crystals upon drying when it contains galactose or raffinose. The inkjet head has a nozzle surface coated with a water-repellent layer. If crystals precipitate in the aqueous ink, the precipitated crystals may abrade the water-repellent layer when the nozzle surface is wiped with a wiper member. Accordingly, when the aqueous ink of the present disclosure contains galactose or raffinose as the saccharides, the content of the galactose or the raffinose, based on the total weight of the aqueous ink, is preferably, for example, 5.00 wt% or less, or 10.00 wt% or less.

The aqueous ink of the present disclosure may further comprise, as needed, additional raw materials such as a pH adjuster, a viscosity adjuster, a preservative, and a mildew inhibitor. The aqueous ink of the present disclosure may also contain, for example, only plant-derived raw materials. That is, all components contained in the aqueous ink, excluding the water contained therein, may be plant-derived components.

### (Inkjet Recording Apparatus and Inkjet Recording Method)

Next, the inkjet recording apparatus and the inkjet recording method of the present disclosure will be described.

The inkjet recording apparatus of the present disclosure includes an inkjet head, and the inkjet head ejects the aqueous ink for inkjet recording of the present disclosure onto a recording medium. The aqueous ink in the present disclosure is a cyan ink containing only phycocyanin as the colorant.

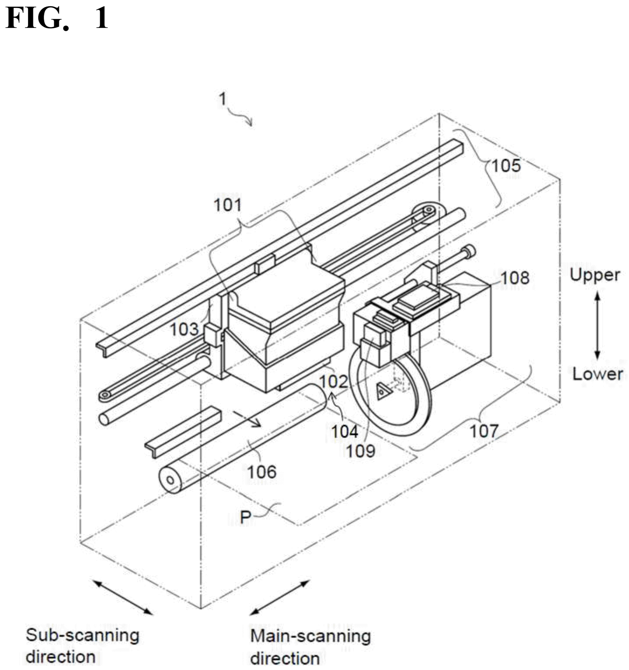

Figure 1 illustrates an example configuration of the inkjet recording apparatus. As shown in the figure, the inkjet recording apparatus 1 includes, as its main components, an ink cartridge 101, an inkjet head 102, a carriage 103, a drive unit 105, a platen roller 106, and a purge device 107. Although not shown in the figure, the ink cartridge 101 and the inkjet head 102 may be connected by an ink flow path, in which case the aqueous ink stored in the ink cartridge 101 may be supplied to the ink flow path, and the inkjet head 102 may apply the aqueous ink onto a recording medium P serving as a recording target. Examples of the recording medium P include, for example, plain paper and glossy paper.

The ink cartridge 101 accommodates the aqueous ink. The housing of the ink cartridge that accommodates the aqueous ink may be, for example, a conventionally known housing.

The inkjet head 102 ejects ink toward a recording medium P serving as a recording target. The carriage 103 carries the ink cartridge 101 and a head unit 104. The drive unit 105 reciprocates the carriage 103 in the main scanning direction. When an image is recorded on the recording medium P, the carriage 103 reciprocates in the main scanning direction while the inkjet head 102 ejects ink, thereby recording on the recording medium P. The drive unit 105 may be, for example, a conventionally known drive unit (see, for example, JP2008-246821 A). The platen roller 106 extends in the main scanning direction.

The purge device 107 sucks defective ink containing bubbles and the like that accumulate inside the inkjet head 102. The purge device 107 may be, for example, a conventionally known device (see, for example, JP2008-246821 A).

As shown in Figure 1, in the main scanning direction, a wiper member 109 is disposed adjacent to the purge device 107 between the purge device 107 and the platen roller 106. The wiper member 109 is a blade having a plate shape made of rubber, and wipes the nozzle-forming surface of the inkjet head 102 as the carriage 103 moves.

In Figure 1, a cap 108 contacts the nozzle-forming surface of the inkjet head 102 and covers the plurality of nozzles. When recording is completed, the carriage 103 moves to a standby position where the inkjet head 102 faces the cap 108. Then, the cap 108 approaches the inkjet head 102 and contacts the nozzle-forming surface, thereby covering the plurality of nozzles provided on the nozzle-forming surface.

In the inkjet recording apparatus 1 of the present example, the ink cartridge 101 is mounted on the carriage 103 together with the inkjet head 102; however, this is not particularly limiting. For example, the ink cartridge 101 may be disposed within the inkjet recording apparatus 1 without being mounted on the carriage 103. Specifically, the ink cartridge 101 and the inkjet head 102 mounted on the carriage 103 may be fluidly connected via the ink flow path such as a tube, and the ink may be supplied from the ink cartridge 101 to the inkjet head 102. In addition, instead of the ink cartridge 101, an ink bottle having a bottle shape may be used. In this case, the inkjet recording apparatus 1 includes an ink tank fixed inside the apparatus, and the ink tank has a filling port. A user inserts the ink bottle into the filling port of the ink tank, and refills ink from the ink bottle into the ink tank.

The recording process using the inkjet recording apparatus 1 is carried out, for example, as follows. First, the recording medium P is supplied from the rear side or the lower side of the inkjet recording apparatus 1. The recording medium P is conveyed by the platen roller 106 to a region facing the inkjet head 102. The conveyed recording medium P is then recorded with an image or the like by ejecting the aqueous ink from the inkjet head 102. Thereafter, the recorded recording medium P is discharged from the inkjet recording apparatus 1. In Figure 1, the conveyance mechanism and the discharge mechanism for conveying the recording medium P to the platen roller 106 and discharging the recording medium P thereafter are omitted from illustration.

In the apparatus shown in Figure 1, a serial-type inkjet head is employed; however, a line-type inkjet head may also be used. In addition, the apparatus shown in Figure 1 may be an apparatus that employs a roll-to-roll system in which the leading end of roll paper is taken up by a take-up device. The serial-type inkjet head is an inkjet head that performs printing while reciprocating in the width direction of the recording medium. The line-type inkjet head is longer than the maximum width of the recording medium that the inkjet recording apparatus 1 can record, and the inkjet head does not reciprocate in the width direction. An inkjet recording apparatus equipped with a line-type inkjet head performs printing by conveying the paper while ejecting ink toward the paper from the inkjet head.

The inkjet recording method of the present disclosure is an inkjet recording method that includes a recording step of ejecting the aqueous ink from an inkjet head onto a recording medium to record on the recording medium. The inkjet recording method of the present disclosure can be carried out, for example, using the inkjet recording apparatus of the present disclosure. The recording includes printing characters or images.

### (EXAMPLES)

Examples of the present disclosure will be described below together with comparative examples. It should be noted that the present disclosure is not limited or restricted by the following examples and comparative examples.

### (Examples 1 to 27, Comparative Examples 1 to 3)

The raw materials other than the colorant in the aqueous ink compositions shown in Table 1, 10.00 wt% of glycerin, and 0.50 wt% of a surfactant (a nonionic surfactant "Genagen C 100 SG Vita" manufactured by Clariant) were uniformly mixed to obtain an ink solvent. Next, the colorant was added to the ink solvent and uniformly mixed to obtain the aqueous inks for inkjet recording of Examples 1 to 27 and Comparative Examples 1 to 3 shown in Table 1.

The aqueous inks of Examples 1 to 27 and Comparative Examples 1 to 3 were evaluated for (a) storage stability over time, (b) evaporation characteristics, and (c) uniformity using the methods described below.

### (a) Storage Stability Over Time

5 grams of each of the aqueous inks of Examples 1 to 27 and Comparative Examples 1 to 3 were weighed into a glass bottle and stored in a constant-temperature chamber at 50°C for 7 days. Each of the aqueous inks before storage and after storage was diluted 150-fold with pure water, and the absorbance was measured. The peak top value in the absorbance spectrum in the range of 400 to 800 nm obtained from each aqueous ink before storage and after storage was acquired, and the rate of change of the value after storage relative to the value before storage was calculated using Equation (1) below. The storage stability over time was then evaluated according to the evaluation criteria described below. 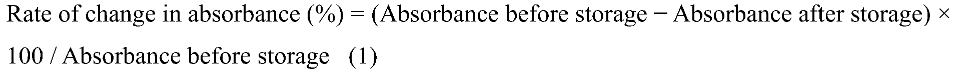 Rate of change in absorbance (%) = (Absorbance before storage - Absorbance after storage) × 100 / Absorbance before storage (1)

When the storage stability over time is high, for example, the color of the ink stored in a transparent or semi-transparent ink cartridge does not change over time, and no visual difference occurs between a new ink and an aged ink.

### (Evaluation Criteria for Storage Stability Over Time)

AA: Rate of change in absorbance is less than 10%.
A: Rate of change in absorbance is 10% or greater and less than 15%.
B: Rate of change in absorbance is 15% or greater and less than 20%.
C: Rate of change in absorbance is 20% or greater.

### (b) evaporation characteristics

The aqueous inks of Examples 1 to 27 and Comparative Examples 1 to 3 were dropped onto a slide glass using a 1-mL dropper, and dried in a constant-temperature chamber at 50°C for 1 day. The dried inks were observed under a microscope (200× magnification), and the evaporation characteristics were evaluated according to the evaluation criteria described below.

### (Evaluation Criteria for Evaporation Characteristics)

OK: No crystal precipitation observed.
NG: Crystal precipitation observed.

### (c) uniformity

The aqueous inks of Examples 1 to 27 and Comparative Examples 1 to 3 were mixed using a magnetic stirrer for 15 minutes or more. The mixed aqueous inks were then evaluated for uniformity according to the evaluation criteria described below.

### (Evaluation Criteria for Uniformity)

OK: No separation of the aqueous ink was observed.
NG: Separation of the aqueous ink was observed.

The presence or absence of separation of the aqueous ink was evaluated by visual observation. In the evaluation of uniformity, an aqueous ink in which the raw materials of the aqueous ink precipitated and did not dissolve in water, or in which the raw materials gelled, was evaluated as "separation of the aqueous ink was observed." An aqueous ink in which the raw materials dissolved in water and no precipitate was present was evaluated as "no separation of the aqueous ink was observed."

The aqueous ink compositions and the evaluation results of the aqueous inks of Examples 1 to 27 and Comparative Examples 1 to 3 are shown in Table 1.

As shown in Table 1, all of the aqueous inks of Examples 1 to 27 exhibited storage stability over time rated as "B" or higher. In addition, all of the aqueous inks exhibited "OK" in the uniformity evaluation.

In addition, Examples 1 to 8, 17 to 20, and 25 to 27, in which glucose, galactose, a combination of glucose and galactose, galactooligosaccharide, or a combination of fructooligosaccharide and galactooligosaccharide was used as the saccharides, exhibited storage stability over time rated as "A" or higher. Furthermore, even when fructose was used as the saccharide, Examples 11 and 12, in which the fructose content was 15.00 wt% or greater based on the total weight of the aqueous ink, exhibited storage stability over time rated as "A" or higher. In addition, even when fructooligosaccharide was used as the saccharide, Examples 14 to 16, in which the fructooligosaccharide content was 10.00 wt% or greater based on the total weight of the aqueous ink, exhibited storage stability over time rated as "A" or higher.

Furthermore, Examples 2 to 4, in which glucose was used as the saccharide and the glucose content was 10.00 wt% or greater based on the total weight of the aqueous ink, exhibited storage stability over time rated as "AA" or higher. Examples 7 and 8, in which galactose was used as the saccharide and the galactose content was 15.00 wt% or greater based on the total weight of the aqueous ink, also exhibited storage stability over time rated as "AA" or higher. Example 25, in which glucose and galactose were used as the saccharides, likewise exhibited storage stability over time rated as "AA" or higher.

Examples 19 and 20, in which galactooligosaccharide was used as the saccharide and the galactooligosaccharide content was 15.00 wt% or greater based on the total weight of the aqueous ink, also exhibited storage stability over time rated as "AA" or higher.

Example 24, in which raffinose was used as the saccharide and the raffinose content was 20.00 wt% or greater based on the total weight of the aqueous ink, also exhibited storage stability over time rated as "AA" or higher.

Example 27, in which a combination of fructooligosaccharide and galactooligosaccharide was used as the saccharides, also exhibited storage stability over time rated as "AA" or higher.

Furthermore, Examples 25 to 27, in which two or more monosaccharides, two or more oligosaccharides, or a combination of a monosaccharide and an oligosaccharide was used as the saccharides, and in which the total content of the saccharides was 20.00 wt% or greater based on the total weight of the aqueous ink, also exhibited storage stability over time rated as "AA" or higher.

In addition, Examples 1 to 4, 9 to 12, 13 to 20, 26, and 27, in which glucose, fructose, fructooligosaccharide, galactooligosaccharide, two or more oligosaccharides, or a combination of a monosaccharide and an oligosaccharide was used as the saccharides, exhibited "OK" in the evaluation of evaporation characteristics.

In contrast, Comparative Example 1, which did not contain any saccharides, exhibited storage stability over time rated as "C." Comparative Examples 2 and 3, which contained cellobiose as a disaccharide or carrageenan as a polysaccharide as the saccharides, could not be made uniform.

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents.

Some or all of the above-described embodiments and examples may also be described as follows, but are not limited thereto:
(1) An aqueous ink for inkjet recording, comprising: water; phycocyanin; a water-soluble organic solvent; and a saccharide, wherein the saccharide comprises a monosaccharide, an oligosaccharide, or both a monosaccharide and an oligosaccharide.
(2) The aqueous ink for inkjet recording according to (1), wherein the saccharide comprises a monosaccharide.
(3) The aqueous ink for inkjet recording according to (1), wherein the saccharide comprises an oligosaccharide.
(4) The aqueous ink for inkjet recording according to (1), wherein the saccharide comprises both a monosaccharide and an oligosaccharide.
(5) The aqueous ink for inkjet recording according to (2), wherein the monosaccharide is glucose, galactose, or both glucose and galactose.
(6) The aqueous ink for inkjet recording according to (2), wherein the monosaccharide is fructose, and wherein the content of the fructose is 15.00 wt% or more based on the total weight of the aqueous ink.
(7) The aqueous ink for inkjet recording according to (2), wherein the monosaccharide is glucose, and wherein the content of the glucose is 10.00 wt% or more based on the total weight of the aqueous ink.
(8) The aqueous ink for inkjet recording according to (2), wherein the monosaccharide is galactose, and wherein the content of the galactose is 15.00 wt% or more based on the total weight of the aqueous ink.
(9) The aqueous ink for inkjet recording according to (2), wherein the monosaccharide is both glucose and galactose, and wherein the total content of the glucose and the galactose is 20.00 wt% or more based on the total weight of the aqueous ink.
(10) The aqueous ink for inkjet recording according to (2), wherein the monosaccharide is glucose or fructose.
(11) The aqueous ink for inkjet recording according to (3), wherein the oligosaccharide is galactooligosaccharide, or both fructooligosaccharide and galactooligosaccharide.
(12) The aqueous ink for inkjet recording according to (3), wherein the oligosaccharide is fructooligosaccharide, and wherein the content of the fructooligosaccharide is 10.00 wt% or more based on the total weight of the aqueous ink.
(13) The aqueous ink for inkjet recording according to (3),wherein the oligosaccharide is galactooligosaccharide, andwherein the content of the galactooligosaccharide is 15.00 wt% or more based on the total weight of the aqueous ink.
(14) The aqueous ink for inkjet recording according to (3),wherein the oligosaccharide is raffinose, andwherein the content of the raffinose is 20.00 wt% or more based on the total weight of the aqueous ink.
(15) The aqueous ink for inkjet recording according to (3),wherein the oligosaccharide is both fructooligosaccharide and galactooligosaccharide, and wherein the total content of the fructooligosaccharide and the galactooligosaccharide is 20.00 wt% or more based on the total weight of the aqueous ink.
(16) The aqueous ink for inkjet recording according to (3), wherein the oligosaccharide is fructooligosaccharide or galactooligosaccharide.
(17) The aqueous ink for inkjet recording according to (4), wherein the total content of the monosaccharide and the oligosaccharide is 20.00 wt% or more based on the total weight of the aqueous ink.
(18) The aqueous ink for inkjet recording according to (1), wherein the saccharide comprises two or more types of oligosaccharides, or comprises the monosaccharide and the oligosaccharide.
(19) An inkjet recording apparatus comprising an inkjet head, wherein the inkjet head is configured to eject the aqueous ink for inkjet recording according to any one of (1) to (18) onto a recording medium.
(20) An inkjet recording method comprising a recording step of ejecting the aqueous ink for inkjet recording according to any one of (1) to (18) from an inkjet head onto a recording medium to record on the recording medium.

### (INDUSTRIAL APPLICABILITY)

As described above, according to the present disclosure, it is possible to provide an aqueous ink for inkjet recording that uses phycocyanin as the colorant and exhibits excellent storage stability over time. The aqueous ink, the inkjet recording apparatus, and the inkjet recording method of the present disclosure can be widely applied to inkjet recording on various recording media.

## Claims

1. An aqueous ink for inkjet recording, comprising:
water;
phycocyanin;
a water-soluble organic solvent; and
a saccharide, wherein the saccharide comprises a monosaccharide, an oligosaccharide, or both a monosaccharide and an oligosaccharide.

2. The aqueous ink for inkjet recording according to claim 1,
wherein the saccharide comprises a monosaccharide.

3. The aqueous ink for inkjet recording according to claim 1,
wherein the saccharide comprises an oligosaccharide.

4. The aqueous ink for inkjet recording according to claim 1,
wherein the saccharide comprises both a monosaccharide and an oligosaccharide.

5. The aqueous ink for inkjet recording according to claim 2,
wherein the monosaccharide is glucose, galactose, or both glucose and galactose.

6. The aqueous ink for inkjet recording according to claim 2,
wherein the monosaccharide is fructose, and the content of the fructose is 15.00 wt% or more based on the total weight of the aqueous ink, or
wherein the monosaccharide is glucose, and the content of the glucose is 10.00 wt% or more based on the total weight of the aqueous ink, or
wherein the monosaccharide is galactose, and the content of the galactose is 15.00 wt% or more based on the total weight of the aqueous ink, or
wherein the monosaccharide is both glucose and galactose, and the total content of the glucose and the galactose is 20.00 wt% or more based on the total weight of the aqueous ink.

7. The aqueous ink for inkjet recording according to claim 2,
wherein the monosaccharide is glucose or fructose.

8. The aqueous ink for inkjet recording according to claim 3,
wherein the oligosaccharide is galactooligosaccharide, or both fructooligosaccharide and galactooligosaccharide.

9. The aqueous ink for inkjet recording according to claim 3,
wherein the oligosaccharide is fructooligosaccharide, and the content of the fructooligosaccharide is 10.00 wt% or more based on the total weight of the aqueous ink, or
wherein the oligosaccharide is galactooligosaccharide, and the content of the galactooligosaccharide is 15.00 wt% or more based on the total weight of the aqueous ink, or
wherein the oligosaccharide is raffinose, and the content of the raffinose is 20.00 wt% or more based on the total weight of the aqueous ink, or
wherein the oligosaccharide is both fructooligosaccharide and galactooligosaccharide, and the total content of the fructooligosaccharide and the galactooligosaccharide is 20.00 wt% or more based on the total weight of the aqueous ink.

10. The aqueous ink for inkjet recording according to claim 3,
wherein the oligosaccharide is fructooligosaccharide or galactooligosaccharide.

11. The aqueous ink for inkjet recording according to claim 4,
wherein the total content of the monosaccharide and the oligosaccharide is 20.00 wt% or more based on the total weight of the aqueous ink.

12. The aqueous ink for inkjet recording according to claim 1,
wherein the saccharide comprises two or more types of oligosaccharides, or comprises the monosaccharide and the oligosaccharide.

13. An inkjet recording apparatus comprising an inkjet head,
wherein the inkjet head is configured to eject the aqueous ink for inkjet recording according to any one of claims 1 to 12 onto a recording medium.

14. An inkjet recording method comprising a recording step of ejecting the aqueous ink for inkjet recording according to any one of claims 1 to 12 from an inkjet head onto a recording medium to record on the recording medium.
